# EUROPEAN PATENT SPECIFICATION

(11) **EP 3 258 525 B1**
(45) Date of publication and mention of the grant of the patent: **10.08.2022**
(21) Application number: 15882109.0
(22) Date of filing: 02.04.2015
(51) Int. Cl.: H01M 8/06, H01M 8/04, C01B 3/48

(54) **FUEL PROCESSING APPARATUS FOR FUEL CELL, AND FUEL CELL SYSTEM**
BRENNSTOFFVERARBEITUNGSVORRICHTUNG FÜR BRENNSTOFFZELLE UND BRENNSTOFFZELLENSYSTEM
APPAREIL DE TRAITEMENT DE COMBUSTIBLE POUR PILE À COMBUSTIBLE, ET SYSTÈME DE PILE À COMBUSTIBLE

(30) Priority: 09.02.2015 KR 20150019646
(43) Date of publication of application: 20.12.2017
(73) Proprietor: Doosan Corporation, Seoul 04563 (KR)
(72) Inventor: CHOI, Myoung-Hoon, Seongnam-si Gyeonggi-do 463-857 (KR); KIM, Ho-Suk, Yongin-si Gyeonggi-do 446-953 (KR); HONG, Byung-Sun, Seongnam-si Gyeonggi-do 463-927 (KR); SHINN, Mee-Nam, Yongin-si Gyeonggi-do 449-821 (KR)
(74) Representative: Krauns, Christian
(86) International application number: PCT/KR2015/003290
(87) International publication number: WO 2016/129746

(56) References cited:
- WO-A1-2012/029322
- GB-A- 1 476 155
- JP-A- 2000 285 949
- JP-A- 2007 112 644
- JP-A- 2008 115 058
- JP-A- 2013 234 076
- JP-A- 2013 242 964
- US-A1- 2002 085 970
- US-A1- 2008 118 413

## Description

### [Technical Field]

The present invention relates to a fuel processing apparatus for supplying hydrogen to a fuel cell and a fuel cell system having the same.

### [Background Art]

A fuel cell, which produces electricity by allowing hydrogen to chemically react with oxygen in the air, is a high-efficiency next-generation energy source that emits neither pollutants nor noise and may be permanently used as long as hydrogen is consistently supplied. A fuel cell system broadly includes the fuel cell, and a fuel processing apparatus for supplying hydrogen to the fuel cell.

A typical fuel processing apparatus includes a reforming reactor which converts a gas mixture of a vapor and a raw material for power generation into hydrogen, a burner which supplies heat to the reforming reactor, and a water gas reactor and a partial oxidation reactor which reduce concentration of carbon monoxide (CO) in reformed gas discharged from the reforming reactor. The concentration of carbon monoxide of the reformed gas treated by the water gas reactor and the partial oxidation reactor is about 50 ppm or lower.

The water-gas shift reaction (CO + H₂O → CO₂ + H₂) in the water gas reactor is an exothermic reaction that releases heat. Because the water gas reactor needs to maintain a constant reaction temperature to obtain a large effect of reducing CO, piping is typically installed on an outer wall of the water gas reactor and a cooling medium is supplied to the piping to prevent overheating.

However, the cooling medium inhibits an increase in temperature when the water gas reactor starts up, and as a result, a startup time is increased, and overall efficiency of the fuel cell system deteriorates in a case in which heat, which is absorbed from the water gas reactor by the cooling medium, is discharged to the outside. In addition, there is a temperature deviation between the outer wall and the interior of the water gas reactor due to the cooling medium, and as a result, the efficiency in reducing CO is decreased as the temperature deviation is increased. The GB 1 476 155 A discloses an apparatus for producing fuel for a fuel cell power plant comprising an endothermic reaction apparatus containing catalyst-containing endothermic reaction chambers and, in which a hydrocarbon fuel is reacted with steam and a hot gas chamber in which a fuel is burned to supply heat to the reaction chambers and a shift conversion chamber which surrounds, in heat exchange relationship, a substantial portion of the hot gas chamber. The WO 2012/029322 A1 discloses a hydrogen generation device comprising a reformer which can generate a hydrogen-containing reformed gas from water and a raw material; a carbon monoxide decreasing unit which is heated with at least a heat of the reformed gas to decrease the amount of carbon monoxide in the reformed gas, thereby producing a fuel gas; a combustor which is so adapted as to combust either the raw material and/or the fuel gas and air to heat the reformer; a combustion air supplier which supplies air to the combustor; a combustion air passage which connects the combustor to the combustion air supplier; and a cooling passage which connects the combustion air passage to the combustor and is so arranged on the periphery of the carbon monoxide decreasing unit as to achieve the heat exchange between the carbon monoxide decreasing unit and a part of air supplied by the combustion air suppler. The US 2008/118413 A1 discloses a reactor air supply system including a first air inlet configured to receive air supplied from a first air supply. The system includes a burner having a burner nozzle configured to discharge fuel for mixing with the first air and configured to ignite the fuel/air mixture. A second air inlet is provided that is configured to receive heated air supplied from a second air supply, and a duct is provided to receive the ignited fuel/air mixture and the heated air supplied from the second air supply. The duct has an outlet configured to connect to a reactor. The duct is configured to receive the heated second air such that the heated second air mixes with the ignited fuel/air mixture at a location downstream of the burner.

### [DISCLOSURE]

### [Technical Problem]

The present invention has been made in an effort to provide a fuel treatment apparatus for a fuel cell, which prevents overheating of a water gas reactor by using a cooling medium, in which a startup time for the water gas reactor may be decreased, overall efficiency of the fuel cell system may be increased by reusing heat absorbed from the water gas reactor, and efficiency in reducing CO may be increased by reducing a temperature deviation of the water gas reactor, and to provide a fuel cell system having the fuel treatment apparatus.

### [Technical Solution]

The object of the present invention is solved by a fuel processing apparatus according to independent claim 1 and a fuel cell system according to independent claim 5. Further embodiments are disclosed in the dependent claims.

An exemplary embodiment of the present invention provides a fuel processing apparatus for a fuel cell, including: a reforming reactor; a burner; a water gas reactor; and a valve. The reforming reactor produces reformed gas from a gas mixture of water and a raw material for power generation. The burner supplies heat to the reforming reactor. The water gas reactor includes a reactor main body which is supplied with the reformed gas from the reforming reactor and reduces concentration of carbon monoxide in the reformed gas, and a cooling flow path which is installed in the reactor main body. The valve controls a supply of a cooling medium to the cooling flow path according to a startup or a normal operation of the water gas reactor.

The burner is supplied with burner fuel and burner air through a fuel pipe and an air pipe, and the cooling medium is the burner air supplied to the burner. The cooling flow path is connected to a supply pipe and a discharge pipe outside the reactor main body. The supply pipe is connected to the air pipe, and the discharge pipe is connected to any one of the air pipe and the fuel pipe.

The valve may be a 3-way valve connected to the air pipe and the supply pipe, the valve may provide the cooling medium to the burner through the air pipe when the water gas reactor starts up, and the valve may provide the cooling medium to the cooling flow path through the supply pipe when the water gas reactor normally operates. A temperature of the cooling medium provided to the cooling flow path may be increased through heat exchange with the water gas reactor, and then the cooling medium may be provided to the burner through the discharge pipe.

The reactor main body has a catalyst therein. An inlet pipe and an outlet pipe for the reformed gas are connected to an upper end of a sidewall and a lower end of the sidewall of the reactor main body that abut against the catalyst.

The cooling flow path includes a first cover plate which covers an upper end of the catalyst, a second cover plate which covers a lower end of the catalyst, and a plurality of cooling pipes which is connected to the first cover plate and the second cover plate and penetrates the catalyst. The supply pipe and the discharge pipe for the cooling medium may be connected to lower and upper ends of the reactor main body. An edge of the first cover plate and an edge of the second cover plate may be sealed to prevent a leak of the reformed gas inputted to the catalyst.

Another exemplary embodiment of the present invention provides a fuel cell system including: a fuel cell; and a fuel processing apparatus which supplies the fuel cell with reformed gas containing hydrogen. The fuel processing apparatus includes a reforming reactor, a burner, a water gas reactor, and a valve. The reforming reactor produces reformed gas from a gas mixture of water and a raw material for power generation. The burner supplies heat to the reforming reactor. The water gas reactor includes a reactor main body which is supplied with the reformed gas from the reforming reactor and reduces concentration of carbon monoxide in the reformed gas, and a cooling flow path which is installed in the reactor main body. The valve controls a supply of a cooling medium to the cooling flow path while distinguishing a startup and a normal operation of the water gas reactor.

The burner is supplied with burner fuel and burner air through a fuel pipe and an air pipe, and the cooling medium may be the burner air supplied to the burner. The cooling flow path is connected to a supply pipe and a discharge pipe outside the reactor main body. The supply pipe is connected to the air pipe, and the discharge pipe is connected to any one of the air pipe and the fuel pipe.

The valve may be a 3-way valve connected to the air pipe and the supply pipe, the valve may provide the cooling medium to the burner through the air pipe when the water gas reactor starts up, and the valve may provide the cooling medium to the cooling flow path through the supply pipe when the water gas reactor normally operates. A temperature of the cooling medium provided to the cooling flow path may be increased through heat exchange with the water gas reactor, and then the cooling medium may be provided to the burner through the discharge pipe.

The reactor main body has a catalyst therein. An inlet pipe and an outlet pipe for the reformed gas are connected to a sidewall upper end and a sidewall lower end of the reactor main body that abut against the catalyst.

The cooling flow path includes a first cover plate which covers an upper end of the catalyst, a second cover plate which covers a lower end of the catalyst, and a plurality of cooling pipes which is connected to the first cover plate and the second cover plate and penetrates the catalyst. The supply pipe and the discharge pipe for the cooling medium are connected to lower and upper ends of the reactor main body. An edge of the first cover plate and an edge of the second cover plate may be sealed to prevent a leak of the reformed gas inputted to the catalyst.

### [Advantageous Effects]

According to the exemplary embodiments of the present invention, it is possible to decrease a startup time by cutting off a supply of the cooling medium to the cooling flow path of the water gas reactor when starting up the water gas reactor, and to prevent overheating of the water gas reactor by supplying the cooling medium to the cooling flow path when normally operating the water gas reactor.

In addition, the cooling medium, which is inputted into the cooling flow path and heated during the normal operation of the water gas reactor, is supplied to the burner instead of being discharged to the outside, and as a result, it is possible to reduce the usage amount of burner fuel, and to improve overall efficiency of the fuel cell system.

### [Description of the Drawings]

FIG. 1 is a configuration view of a fuel cell system according to an exemplary embodiment of the present invention.
FIG. 2 is a schematic cross-sectional view of a water gas reactor of the fuel cell system illustrated in FIG. 1.
FIG. 3 is a perspective view of a cooling flow path of the water gas reactor illustrated in FIG. 2.
FIG. 4 is a cross-sectional view illustrating a water gas reactor of a Comparative Example.

### [Mode for Invention]

Hereinafter, the present invention will be described more fully hereinafter with reference to the accompanying drawings, in which example embodiments of the invention are shown. As those skilled in the art would realize, the described embodiments may be modified in various different ways, all without departing from the scope of the present invention, that is the scope of the appended claims.

Further, in the present specification, when a part such as a layer, a film, a region, and a plate is present "on" or "at an upper portion of" another part, the case includes not only a case where the part is present "immediately on" another part, but also a case where still another part is present therebetween. Further, "one object is positioned on the other object" means that one object is positioned over or under the other object, but does not necessarily mean that one object is positioned over the other object based on the gravitational direction.

The size and thickness of each component illustrated in the drawings are arbitrarily shown for understanding and ease of description, but the present invention is not limited thereto.

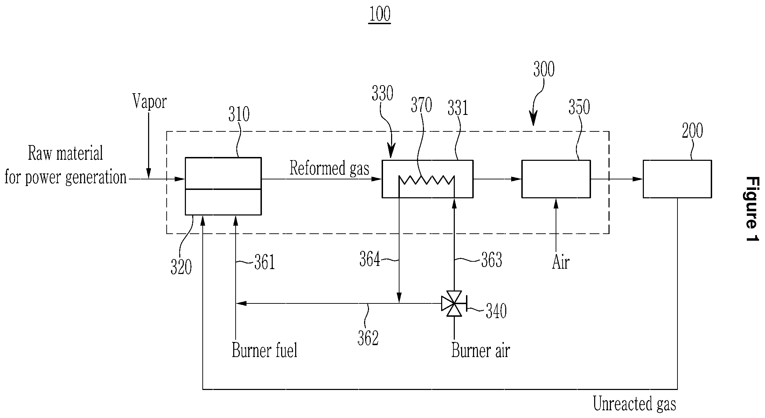

FIG. 1 is a configuration view of a fuel cell system according to an exemplary embodiment of the present invention.

Referring to FIG. 1, a fuel cell system 100 includes a fuel cell 200, and a fuel processing apparatus 300 which supplies hydrogen to the fuel cell 200. The fuel processing apparatus 300 produces reformed gas, which contains a large amount of hydrogen, from a raw material for power generation and supplies the reformed gas to the fuel cell 200, and the fuel cell 200 allows the supplied hydrogen to chemically react with oxygen in the air, thereby producing electrical energy.

The fuel processing apparatus 300 includes a reforming reactor 310 which converts a gas mixture of water (vapor) and a raw material for power generation into hydrogen, a burner 320 which supplies heat to the reforming reactor 310, a water gas reactor 330 which reduces concentration of carbon monoxide in the reformed gas discharged from the reforming reactor 310, and a valve 340 which controls a supply of a cooling medium in the water gas reactor 330. The fuel processing apparatus 300 may further include a partial oxidation reactor 350 connected to the water gas reactor 330.

The raw material for power generation may be hydrocarbon-based fuel such as liquefied natural gas (LNG) or liquefied petroleum gas (LPG), and the reforming reactor 310 may be a vapor reforming reactor. The reforming reactor 310 reforms hydrocarbon in the raw material for power generation into hydrogen by allowing the hydrocarbon to react with oxygen under a high-temperature atmosphere. In this case, carbon monoxide CO is generated as a reaction by-product. A chemical reaction performed by the reforming reactor 310 is as follows.

Reaction 1 CH₄ + H₂O ↔ CO + 3H₂ (△H₂₉₈ = 205.813kJ/mol) CO + H₂O ↔ CO₂ + H₂ (△H₂₉₈ = -41.15kJ/mol)

The reforming reactor 310 discharges the reformed gas including hydrogen, carbon monoxide, and carbon dioxide, and the discharged reformed gas is inputted into the water gas reactor 330.

The burner 320 supplies heat to the reforming reactor 310, and allows the reforming reactor 310 to maintain a high temperature required for the reforming reaction. The burner 320 is supplied with burner fuel (such as city gas) through a fuel pipe 361, and an air pipe 362 is connected to the fuel pipe 361. The burner 320 generates combustion heat by combusting burner fuel and burner air.

The water gas reactor 330 converts carbon monoxide in the reformed gas into carbon dioxide by using a water-gas shift reaction. The water gas reactor 330 includes a reactor main body 331 having a catalyst therein. The catalyst may be configured from various catalysts such as a Cu-Zn based catalyst, a catalyst having a metal oxide carrier supported with platinum, and a catalyst including Cu and platinum-based metal. A chemical reaction performed by the water gas reactor 330 is as follows.

Reaction 2 CO + H₂O ↔ CO₂ + H₂ (△H₂₉₈ = -41.15kJ/mol)

The fuel cell system 100 may become stable as the concentration of carbon monoxide is decreased in the water gas reactor 330. The partial oxidation reactor 350 is supplied with the reformed gas from the water gas reactor 330, reduces the concentration of carbon monoxide to 50 ppm or less, particularly, 10 ppm or less, and supplies the carbon monoxide to the fuel cell 200. A chemical reaction performed by the partial oxidation reactor 350 is as follows.

Reaction 3 CO + ½O₂ ↔ CO₂ (△H₂₉₈ = -282.984kJ/mol)

Final reformed gas produced by the fuel processing apparatus 300 is supplied to the fuel cell 200 and used for power generation, and unreacted gas, which is discharged without being used for power generation, is supplied to the burner 320 and used to increase a temperature of the reforming reactor 310.

The water gas reactor 330 requires a predetermined time (startup time) until the catalyst reaches a reaction temperature and the water gas reactor 330 normally operates when the fuel cell system 100 starts up. The water gas reactor 330 may include a heater (not illustrated) for decreasing the startup time. Further, the water gas reactor 330 continuously generates heat while normally operating, and carbon dioxide is converted back into carbon monoxide at a particular temperature or higher, and as a result, it is necessary to maintain a constant temperature by using the cooling medium.

The water gas reactor 330 includes a cooling flow path 370 installed in the reactor main body 331. The cooling flow path 370 provides a closed flow path so that the cooling medium is not mixed with the reformed gas, and the cooling flow path 370 is connected to a supply pipe 363 and a discharge pipe 364 outside the reactor main body 331. The cooling medium, which is inputted into the cooling flow path 370 through the supply pipe 363, exchanges heat with the catalyst such that a temperature of the cooling medium is increased, and then the cooling medium is discharged through the discharge pipe 364.

The valve 340 is installed in the supply pipe 363 of the cooling flow path 370 and controls the supply of the cooling medium while distinguishing between the startup and the normal operation of the water gas reactor 330. Specifically, the valve 340 cuts off the supply of the cooling medium when the water gas reactor 330 starts up, thereby preventing the cooling medium from hindering an increase in temperature of the water gas reactor 330. In addition, the valve 340 supplies the cooling medium when the water gas reactor 330 normally operates, thereby allowing the water gas reactor 330 to maintain a constant temperature.

Assuming that the cooling medium is inputted at the same time of the startup of the water gas reactor 330, the cooling medium hinders an increase in temperature of the water gas reactor 330, such that a long period of time is required until the catalyst reaches a reaction temperature. That is, the startup time is increased. However, in the fuel processing apparatus 300 of the present exemplary embodiment, the valve 340 supplies the cooling medium only when the water gas reactor 330 normally operates, and as a result, it is possible to decrease the startup time of the water gas reactor 330.

In addition, the cooling medium, which is inputted into the cooling flow path 370 and obtains heat from the water gas reactor 330 during the normal operation, is reused in the fuel cell system 100 without being discharged to the outside. To this end, the burner air, which is supplied to the burner 320, may be used as a cooling medium for the water gas reactor 330. Specifically, the valve 340 may be a 3-way valve connected to the air pipe 362 and the supply pipe 363 of the cooling flow path 370, and the discharge pipe 364 of the cooling flow path 370 is connected to the air pipe 362 or the fuel pipe 361.

When the water gas reactor 330 starts up, the valve 340 closes the supply pipe 363 and opens the air pipe 362 to provide the cooling medium to the burner 320 through the air pipe 362. Thereafter, when the catalyst of the water gas reactor 330 reaches the reaction temperature and thus reaches a normal operating condition, the valve 340 closes the air pipe 362 and opens the supply pipe 363 to provide the cooling medium to the cooling flow path 370 through the supply pipe 363.

The temperature of the cooling medium, which is inputted into the cooling flow path 370, is increased through heat exchange with the water gas reactor 330, and the cooling medium (burner air) heated by the heat exchange is supplied to the burner 320. Since the heated burner air is supplied to the burner 320, the usage amount of the burner fuel may be reduced, which leads to an improvement in efficiency of the fuel cell system 100.

For example, city gas of 41 Nℓ/min and vapor of 125 cc/min may be supplied to the reforming reactor 310, and heat produced by the water gas reactor 330 may be -34.52 kJ/min. The cooling medium (burner air) of 200 Nℓ/min (25°C) may be supplied to the cooling flow path 370 during the normal operation of the water gas reactor 330, and a temperature of the cooling medium, which is discharged after reaction heat of the water gas reactor 330 is removed, may be about 155°C.

The high-temperature air is supplied to the burner 320, and it is possible to save burner fuel of about 0.95 Nℓ/min as shown in the following relationship formula related to the amount of generated heat.

CH₄ + 2O₂ ↔ CO₂ + 2H₂O (△H₂₉₈ = -802.625kJ/mol)

The above reaction formula is a relationship formula related to the amount of heat generated by a reaction between methane and oxygen.

As described above, since the stepwise operating method, which distinguishes the startup and the normal operation of the water gas reactor 330, is applied to the fuel processing apparatus 300 of the present exemplary embodiment, it is possible to decrease the startup time of the water gas reactor 330. In addition, the cooling medium heated through the heat exchange is supplied to the burner 320, such that the usage amount of the burner fuel is reduced, and as a result, it is possible to improve overall efficiency of the fuel cell system 100.

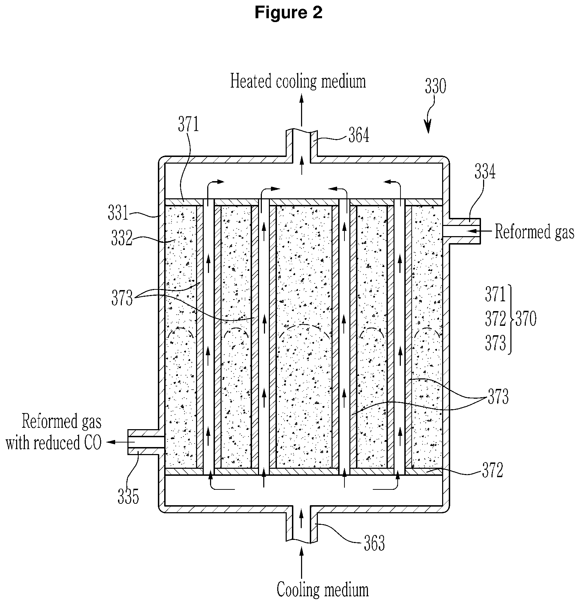

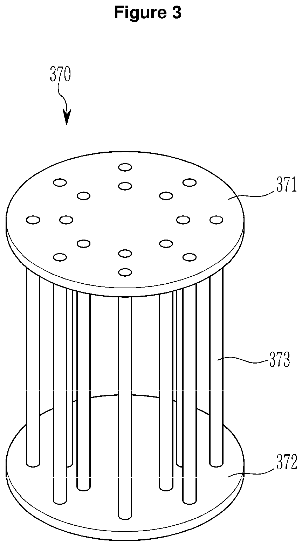

FIG. 2 is a schematic cross-sectional view of the water gas reactor of the fuel cell system illustrated in FIG. 1, and FIG. 3 is a perspective view of the cooling flow path of the water gas reactor illustrated in FIG. 2.

Referring to FIGS. 2 and 3, the water gas reactor 330 includes the reactor main body 331 which has a catalyst 332 therein, and the cooling flow path 370 which is installed in the reactor main body 331.

The catalyst 332 is positioned in the reactor main body 331 at a predetermined distance from upper and lower ends of the reactor main body 331. An inlet pipe 334 may be connected to an upper portion of a sidewall of the reactor main body 331 that abuts against the catalyst 332, and an outlet pipe 335 may be connected to a lower portion of the sidewall of the reactor main body 331 that abuts against the catalyst 332.

The reformed gas discharged from the reforming reactor 310 is inputted to the reactor main body 331 through the inlet pipe 334, and carbon monoxide in the inputted reformed gas is converted into carbon dioxide through the water-gas shift reaction caused by the catalyst 332. The reformed gas with lowered concentration of carbon monoxide is discharged through the outlet pipe 335.

The supply pipe 363 for the cooling medium may be connected to a center of a lower end of the reactor main body 331, and the discharge pipe 364 for the cooling medium may be connected to a center of an upper end of the reactor main body 331. The cooling flow path 370 includes a first cover plate 371 which covers an upper end of the catalyst 332, a second cover plate 372 which covers a lower end of the catalyst 332, and a plurality of cooling pipes 373 which is connected to the first cover plate 371 and the second cover plate 372 and penetrates the catalyst 332.

The first cover plate 371 may be spaced apart from the upper end of the reactor main body 331, and the second cover plate 372 may be spaced apart from the lower end of the reactor main body 331. An edge of the first cover plate 371 and an edge of the second cover plate 372 are sealed to prevent the reformed gas, which is inputted to the catalyst 332, from leaking to the outside of the first and second cover plates 371 and 372.

The plurality of cooling pipes 373 may be formed to have the same diameter, and the plurality of cooling pipes 373 may be disposed at an equal interval. Each of the first cover plate 371 and the second cover plate 372 is a porous plate formed with a plurality of openings, and opens end portions of the plurality of cooling pipes 373.

The cooling medium, which is inputted to the reactor main body 331 through the supply pipe 363, is distributed to the plurality of cooling pipes 373, and exchanges heat with the catalyst 332 while passing through the plurality of cooling pipes 373. Since the plurality of cooling pipes 373 penetrates the catalyst 332 in the reactor main body 331, the cooling medium supplied to the cooling flow path 370 may uniformly cool the catalyst 332. Therefore, it is possible to increase efficiency in reducing CO by decreasing a temperature deviation for each position of the catalyst 332.

FIG. 2 illustrates a temperature distribution of the catalyst 332 by a dotted line. The temperature of the catalyst 332 is increased as a distance from the cooling flow path 370 is increased, and since the plurality of cooling pipes 373 penetrates the catalyst 332, the temperature deviation for each position of the catalyst 332 is not high.

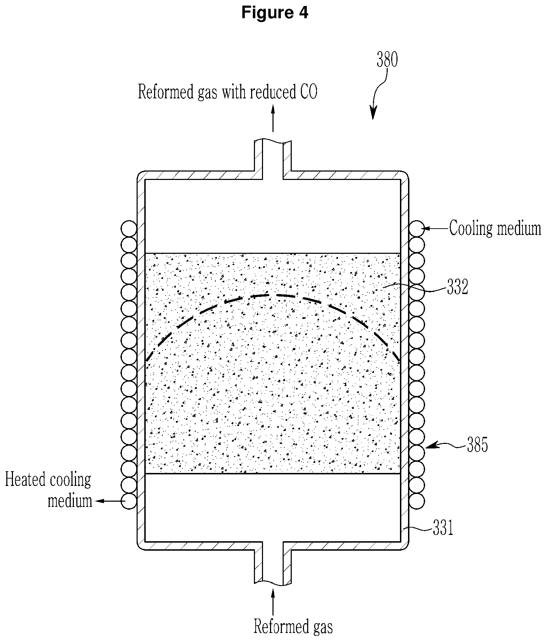

FIG. 4 is a cross-sectional view illustrating a water gas reactor of a Comparative Example.

Referring to FIG. 4, a water gas reactor 380 of the Comparative Example includes a reactor main body 331 which has a catalyst 332 therein, and a cooling flow path 385 which is installed on an outer wall of the reactor main body 331. The cooling flow path 385 is in the form of a coil wound around the reactor main body 331, and exhaust gas of a burner or water may be used as a cooling medium.

FIG. 4 illustrates a temperature distribution of the catalyst 332 by a dotted line. Since the cooling medium abuts against the outer wall of the reactor main body 331 and exchanges heat with the reactor main body 331, a cooling effect of the cooling medium rarely affects a central portion of the catalyst 332. Therefore, the water gas reactor 380 of the Comparative Example has a high temperature deviation and low efficiency in reducing CO.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A fuel treatment apparatus (300) for a fuel cell (200), comprising:
a reforming reactor (310) configured for producing reformed gas from a gas mixture of water and a raw material for power generation;
a burner (320) configured for supplying heat to the reforming reactor (310);
a water gas reactor (330) including a reactor main body (331) configured for being supplied with the reformed gas from the reforming reactor (310) and reducing concentration of carbon monoxide in the reformed gas and a cooling flow path (370) that is installed in the reactor main body (331); and
a valve (340) configured for controlling a supply of a cooling medium to the cooling flow path (370) according to a startup or a normal operation of the water gas reactor (330); wherein
the burner (320) is configured for being supplied with burner fuel and burner air through a fuel pipe (361) and an air pipe (362), and
the cooling medium is the burner air supplied to the burner (320); wherein
the cooling flow path (370) is connected to a supply pipe (363) and a discharge pipe (364) outside the reactor main body (331),
the supply pipe (363) is connected to the air pipe (362), and
the discharge pipe (364) is connected to any one of the air pipe (362) and the fuel pipe (361); wherein
the reactor main body (331) has a catalyst (332) therein, the catalyst (332) positioned in the reactor main body (331) at a predetermined distance from upper and lower ends of the reactor main body (331), and
an inlet pipe (334) and an outlet pipe (335) for the reformed gas are connected to an upper portion of a sidewall and a lower portion of the sidewall of the reactor main body (331) that abut against the catalyst (332), the sidewall of the reactor main body (331) connecting the upper and lower ends of the reactor main body (331); wherein
the cooling flow path (370) includes a first cover plate (371) which covers an upper end of the catalyst (332), a second cover plate (372) which covers a lower end of the catalyst (332), and a plurality of cooling pipes (373) which is connected to the first cover plate (371) and the second cover plate (372) and penetrates the catalyst (332), and
the supply pipe (363) and the discharge pipe (364) for the cooling medium are connected to lower and upper ends of the reactor main body (331).

2. The fuel treatment apparatus (300) of claim 1, wherein:
the valve (340) is a 3-way valve connected to the air pipe (362) and the supply pipe (363), the valve (340) is configured for providing the cooling medium to the burner (320) through the air pipe (362) when the water gas reactor (330) starts up, and the valve (340) is configured for providing the cooling medium to the cooling flow path (370) through the supply pipe (363) when the water gas reactor (330) normally operates.

3. The fuel treatment apparatus (300) of claim 2, wherein:
a temperature of the cooling medium provided to the cooling flow path (370) is configured for being increased through heat exchange with the water gas reactor (330), and then the cooling medium is configured for being provided to the burner (320) through the discharge pipe (364).

4. The fuel treatment apparatus (300) of claim 1, wherein:
an edge of the first cover plate (371) and an edge of the second cover plate (372) are sealed to prevent a leak of the reformed gas inputted to the catalyst (332).

5. A fuel cell system (100) including:
a fuel cell (200); and
a fuel treatment apparatus (300) configured for supplying the fuel cell (200) with reformed gas containing hydrogen,
wherein the fuel treatment apparatus (300) includes:
a reforming reactor (310) configured for producing the reformed gas from a gas mixture of water and a raw material for power generation;
a burner (320) configured for supplying heat to the reforming reactor (310);
a water gas reactor (330) including a reactor main body (331) configured for being supplied with the reformed gas from the reforming reactor (310) and configured for reducing concentration of carbon monoxide in the reformed gas and a cooling flow path (370) that is installed in the reactor main body (331); and
a valve (340) configured for controlling a supply of a cooling medium to the cooling flow path (370) according to a startup and a normal operation of the water gas reactor (330); wherein
the burner (320) is supplied with burner fuel and burner air through a fuel pipe (361) and an air pipe (362), and
the cooling medium is the burner air supplied to the burner (320); wherein
the cooling flow path (370) is connected to a supply pipe (363) and a discharge pipe (364) outside the reactor main body (331),
the supply pipe (363) is connected to the air pipe (362), and
the discharge pipe (364) is connected to any one of the air pipe (362) and the fuel pipe (361); wherein
the reactor main body (331) has a catalyst (332) therein, the catalyst (332) positioned in the reactor main body (331) at a predetermined distance from upper and lower ends of the reactor main body (331), and
an inlet pipe (334) and an outlet pipe (335) for the reformed gas are connected to an upper portion of a sidewall and a lower portion of the sidewall of the reactor main body (331) that abut against the catalyst (332), the sidewall of the reactor main body (331) connecting the upper and lower ends of the reactor main body (331); wherein
the cooling flow path (370) includes a first cover plate (371) which covers an upper end of the catalyst (332), a second cover plate (372) which covers a lower end of the catalyst (332), and a plurality of cooling pipes (373) which is connected to the first cover plate (371) and the second cover plate (372) and penetrates the catalyst (332), and
the supply pipe (363) and the discharge pipe (364) for the cooling medium are connected to lower and upper ends of the reactor main body (331).

6. The fuel cell system (100) of claim 5, wherein:
the valve (340) is a 3-way valve connected to the air pipe (362) and the supply pipe (363), the valve (340) is configured for providing the cooling medium to the burner (320) through the air pipe (362) when the water gas reactor (330) starts up, and the valve (340) is configured for providing the cooling medium to the cooling flow path (370) through the supply pipe (363) when the water gas reactor (330) normally operates.

7. The fuel cell system (100) of claim 6, wherein:
a temperature of the cooling medium provided to the cooling flow path (370) is configured for being increased through heat exchange with the water gas reactor (330), and then the cooling medium is configured for being provided to the burner (320) through the discharge pipe (364).

8. The fuel cell system (100) of claim 5, wherein:
an edge of the first cover plate (371) and an edge of the second cover plate (372) are sealed to prevent the reformed gas inputted to the catalyst (332) from leaking.

## Patentansprüche

1. Brennstoffverarbeitungsvorrichtung (300) für eine Brennstoffzelle (200), welche aufweist:
einen Reformierungsreaktor (310), der ausgestaltet ist, um ein reformiertes Gas aus einem Gasgemisch aus Wasser und einem Rohmaterial zur Energieerzeugung zu erzeugen,
einen Brenner (320), der ausgestaltet ist, um Wärme dem Reformierungsreaktor (310) zuzuführen,
einen Wassergasreaktor (330), der einen Reaktorhauptkörper (331), der ausgestaltet ist, um das reformierte Gas aus dem Reformierungsreaktor (310) zugeführt zu bekommen und um die Konzentration an Kohlenmonoxid in dem reformierten Gas zu verringern, und einen Kühlströmungspfad (370) enthält, der in dem Reaktorhauptkörper (331) angebracht ist, und
ein Ventil (340), das ausgestaltet ist, um eine Zufuhr eines Kühlmediums zu dem Kühlströmungspfad (370) in Abhängigkeit von einem Anfahren oder einem normalen Betrieb des Wassergasreaktors (330) zu steuern, wobei
der Brenner (320) ausgestaltet ist, um durch eine Brennstoffleitung (361) und eine Luftleitung (362) mit Brennerbrennstoff und Brennerluft versorgt zu werden, und
das Kühlmedium die dem Brenner (320) zugeführte Brennerluft ist, wobei
der Kühlströmungspfad (370) mit einer Zufuhrleitung (363) und einer Abfuhrleitung (364) außerhalb des Reaktorhauptkörpers (331) verbunden ist,
die Zufuhrleitung (363) mit der Luftleitung (362) verbunden ist, und
die Abfuhrleitung (364) mit der Luftleitung (362) oder der Brennstoffleitung (361) verbunden ist, wobei
der Reaktorhauptkörper (331) einen Katalysator (332) darin aufweist, wobei der Katalysator (332) in dem Reaktorhauptkörper (331) in einem vorbestimmten Abstand von einem oberen Ende und einem unteren Ende des Reaktorhauptkörpers (331) angeordnet ist, und
ein Einlassrohr (334) und ein Auslassrohr (335) für das reformierte Gas mit einem oberen Abschnitt einer Seitenwand und einem unteren Abschnitt der Seitenwand des Reaktorhauptkörpers (331) verbunden sind, die an dem Katalysator (332) anliegen, wobei die Seitenwand des Reaktorhauptkörpers (331) das obere Ende und das untere Ende des Reaktorhauptkörpers (331) verbindet, wobei
der Kühlströmungspfad (370) eine erste Abdeckplatte (371), die ein oberes Ende des Katalysators (332) abdeckt, eine zweite Abdeckplatte (372), die ein unteres Ende des Katalysators (332) abdeckt, und eine Vielzahl an Kühlrohren (373) aufweist, die mit der ersten Abdeckplatte (371) und der zweiten Abdeckplatte (372) verbunden sind und den Katalysator (332) durchdringen, und
die Zufuhrleitung (363) und die Abfuhrleitung (364) für das Kühlmedium mit dem unteren Ende und dem oberen Ende des Reaktorhauptkörpers (331) verbunden sind.

2. Brennstoffverarbeitungsvorrichtung (300) nach Anspruch 1, wobei
das Ventil (340) ein 3-Wege-Ventil ist, das mit der Luftleitung (362) und der Zufuhrleitung (363) verbunden ist, das Ventil (340) ausgestaltet ist, um dem Brenner (320) das Kühlmedium durch die Luftleitung (362) zuzuführen, wenn der Wassergasreaktor (330) anläuft, und das Ventil (340) ausgestaltet ist, um dem Kühlströmungspfad (370) das Kühlmedium durch die Zufuhrleitung (363) zuzuführen, wenn der Wassergasreaktor (330) normal arbeitet.

3. Brennstoffverarbeitungsvorrichtung (300) nach Anspruch 2, wobei
eine Temperatur des Kühlmediums, das dem Kühlströmungspfad (370) zugeführt wird, ausgestaltet ist, um durch einen Wärmeaustausch mit dem Wassergasreaktor (330) erhöht zu werden, und dann das Kühlmedium ausgestaltet ist, um dem Brenner (320) durch die Abfuhrleitung (364) zugeführt zu werden.

4. Brennstoffverarbeitungsvorrichtung (300) nach Anspruch 1, wobei
ein Rand der ersten Abdeckplatte (371) und ein Rand der zweiten Abdeckplatte (372) abgedichtet sind, um ein Austreten des in den Katalysator (332) eingeleiteten reformierten Gases zu verhindern.

5. Brennstoffzellensystem (100), welches enthält:
eine Brennstoffzelle (200), und
eine Brennstoffverarbeitungsvorrichtung (300), die ausgestaltet ist, um die Brennstoffzelle (200) mit einem reformierten, wasserstoffhaltigen Gas zu versorgen, wobei die Brennstoffverarbeitungsvorrichtung (300) enthält:
einen Reformierungsreaktor (310), der ausgestaltet ist, um das reformierte Gas aus einem Gasgemisch aus Wasser und einem Rohstoff zur Energieerzeugung zu erzeugen,
einen Brenner (320), der ausgestaltet ist, um Wärme dem Reformierungsreaktor (310) zuzuführen,
einen Wassergasreaktor (330), der einen Reaktorhauptkörper (331), der ausgestaltet ist, um mit dem reformierten Gas aus dem Reformierungsreaktor (310) versorgt zu werden, und der ausgestaltet ist, um die Konzentration an Kohlenmonoxid in dem reformierten Gas zu verringern, und einen Kühlströmungspfad (370) enthält, der in dem Reaktorhauptkörper (331) angebracht ist, und
ein Ventil (340), das ausgestaltet ist, um die Zufuhr eines Kühlmediums zu dem Kühlströmungspfad (370) in Abhängigkeit von einem Anfahren und einem normalen Betrieb des Wassergasreaktors (330) zu steuern, wobei
der Brenner (320) durch eine Brennstoffleitung (361) und eine Luftleitung (362) mit Brennerbrennstoff und Brennerluft versorgt wird, und
das Kühlmedium die Brennerluft ist, die dem Brenner (320) zugeführt wird, wobei
der Kühlströmungspfad (370) mit einer Zufuhrleitung (363) und einer Abfuhrleitung (364) außerhalb des Reaktorhauptkörpers (331) verbunden ist,
die Zufuhrleitung (363) mit der Luftleitung (362) verbunden ist, und
die Abfuhrleitung (364) mit der Luftleitung (362) oder der Brennstoffleitung (361) verbunden ist, wobei
der Reaktorhauptkörper (331) einen Katalysator (332) darin aufweist, wobei der Katalysator (332) in dem Reaktorhauptkörper (331) in einem vorbestimmten Abstand von einem oberen Ende und einem unteren Ende des Reaktorhauptkörpers (331) angeordnet ist, und
ein Einlassrohr (334) und ein Auslassrohr (335) für das reformierte Gas mit einem oberen Abschnitt einer Seitenwand und einem unteren Abschnitt der Seitenwand des Reaktorhauptkörpers (331) verbunden sind, die an dem Katalysator (332) anliegen, wobei die Seitenwand des Reaktorhauptkörpers (331) das obere Ende und das untere Ende des Reaktorhauptkörpers (331) verbindet, wobei
der Kühlströmungspfad (370) eine erste Abdeckplatte (371), die ein oberes Ende des Katalysators (332) abdeckt, eine zweite Abdeckplatte (372), die ein unteres Ende des Katalysators (332) abdeckt, und eine Vielzahl an Kühlrohren (373) aufweist, die mit der ersten Abdeckplatte (371) und der zweiten Abdeckplatte (372) verbunden sind und den Katalysator (332) durchdringen, und
die Zufuhrleitung (363) und die Abfuhrleitung (364) für das Kühlmedium mit dem unteren Ende und dem oberen Ende des Reaktorhauptkörpers (331) verbunden sind.

6. Brennstoffzellensystem (100) nach Anspruch 5, wobei
das Ventil (340) ein 3-Wege-Ventil ist, das mit der Luftleitung (362) und der Zufuhrleitung (363) verbunden ist, das Ventil (340) ausgestaltet ist, um dem Brenner (320) das Kühlmedium durch die Luftleitung (362) zuzuführen, wenn der Wassergasreaktor (330) anläuft, und das Ventil (340) ausgestaltet ist, um dem Kühlströmungspfad (370) das Kühlmedium durch die Zufuhrleitung (363) zuzuführen, wenn der Wassergasreaktor (330) normal arbeitet.

7. Brennstoffzellensystem (100) nach Anspruch 6, wobei
eine Temperatur des Kühlmediums, das dem Kühlströmungspfad (370) zugeführt wird, ausgestaltet ist, um durch einen Wärmeaustausch mit dem Wassergasreaktor (330) erhöht zu werden, und dann das Kühlmedium ausgestaltet ist, um dem Brenner (320) durch die Abfuhrleitung (364) zugeführt zu werden.

8. Brennstoffzellensystem (100) nach Anspruch 5, wobei:
eine Kante der ersten Abdeckplatte (371) und eine Kante der zweiten Abdeckplatte (372) abgedichtet sind, um zu verhindern, dass das in den Katalysator (332) eingeleitete reformierte Gas entweicht.

## Revendications

1. Appareil de traitement de combustible (300) pour une pile à combustible (200), comprenant :
un réacteur de reformage (310) configuré pour produire du gaz reformé à partir d'un mélange gazeux d'eau et de matière première pour une génération de puissance ;
un brûleur (320) configuré pour alimenter en chaleur le réacteur de reformage (310) ;
un réacteur de gaz-eau (330) incluant un corps principal de réacteur (331) configuré pour être alimenté en gaz reformé depuis le réacteur de reformage (310) et réduire une concentration de monoxyde de carbone dans le gaz reformé et un chemin d'écoulement de refroidissement (370) qui est installé dans le corps principal de réacteur (331) ; et
une vanne (340) configurée pour commander une alimentation en milieu de refroidissement du chemin d'écoulement de refroidissement (370) selon un démarrage ou un fonctionnement normal du réacteur gaz-eau (330) ; dans lequel
le brûleur (320) est configuré pour être alimenté en combustible de brûleur et en air de brûleur par le biais d'un tuyau de combustible (361) et d'un tuyau d'air (362), et
le milieu de refroidissement est l'air de brûleur fourni au brûleur (320) ; dans lequel
le chemin d'écoulement de refroidissement (370) est raccordé à un tuyau d'alimentation (363) et un tuyau d'évacuation (364) à l'extérieur du corps principal de réacteur (331),
le tuyau d'alimentation (363) est raccordé au tuyau d'air (362), et
le tuyau d'évacuation (364) est raccordé à l'un quelconque du tuyau d'air (362) et du tuyau de combustible (361) ; dans lequel
le corps principal de réacteur (331) a un catalyseur (332) à l'intérieur, le catalyseur (332) étant positionné dans le corps principal de réacteur (331) à une distance prédéterminée d'extrémités supérieure et inférieure du corps principal de réacteur (331), et
un tuyau d'entrée (334) et un tuyau de sortie (335) pour le gaz reformé sont raccordés à une portion supérieure d'une paroi latérale et une portion inférieure de la paroi latérale du corps principal de réacteur (331) qui butent contre le catalyseur (332), la paroi latérale du corps principal de réacteur (331) raccordant les extrémités supérieure et inférieure du corps principal de réacteur (331) ; dans lequel
le chemin d'écoulement de refroidissement (370) inclut une première plaque couvrante (371) qui couvre une extrémité supérieure du catalyseur (332), une seconde plaque couvrante (372) qui couvre une extrémité inférieure du catalyseur (332), et une pluralité de tuyaux de refroidissement (373) qui sont raccordés à la première plaque couvrante (371) et à la seconde plaque couvrante (372) et pénètrent dans le catalyseur (332), et
le tuyau d'alimentation (363) et le tuyau d'évacuation (364) pour le milieu de refroidissement sont raccordés à des extrémités inférieure et supérieure du corps principal de réacteur (331).

2. Appareil de traitement de combustible (300) selon la revendication 1, dans lequel :
la vanne (340) est une vanne 3 voies raccordée au tuyau d'air (362) et au tuyau d'alimentation (363), la vanne (340) est configurée pour fournir le milieu de refroidissement au brûleur (320) par le biais du tuyau d'air (362) lorsque le réacteur gaz-eau (330) démarre, et la vanne (340) est configurée pour fournir le milieu de refroidissement au chemin d'écoulement de refroidissement (370) par le biais du tuyau d'alimentation (363) lorsque le réacteur gaz-eau (330) fonctionne normalement.

3. Appareil de traitement de combustible (300) selon la revendication 2, dans lequel :
une température du milieu de refroidissement fourni au chemin d'écoulement de refroidissement (370) est configurée pour être augmentée par le biais d'un échange de chaleur avec le réacteur gaz-eau (330), puis le milieu de refroidissement est configuré pour être fourni au brûleur (320) par le tuyau d'évacuation (364).

4. Appareil de traitement de combustible (300) selon la revendication 1, dans lequel :
un bord de la première plaque couvrante (371) et un bord de la seconde plaque couvrante (372) sont scellés pour empêcher une fuite du gaz reformé fourni en entrée au catalyseur (332).

5. Système de pile à combustible (100) incluant :
une pile à combustible (200) ; et
un appareil de traitement de combustible (300) configuré pour alimenter la pile à combustible (200) en gaz reformé contenant de l'hydrogène,
dans lequel l'appareil de traitement de combustible (300) inclut :
un réacteur de reformage (310) configuré pour produire le gaz reformé à partir d'un mélange gazeux d'eau et d'une matière première pour une génération de puissance ;
un brûleur (320) configuré pour alimenter en chaleur le réacteur de reformage (310) ;
un réacteur gaz-eau (330) incluant un corps principal de réacteur (331) configuré pour être alimenté en gaz reformé à partir du réacteur de reformage (310) et configuré pour réduire une concentration de monoxyde de carbone dans le gaz reformé et un chemin d'écoulement de refroidissement (370) qui est installé dans le corps principal de réacteur (331) ; et
une vanne (340) configurée pour commander une alimentation en milieu de refroidissement au chemin d'écoulement de refroidissement (370) selon un démarrage et un fonctionnement normal du réacteur gaz-eau (330) ; dans lequel
le brûleur (320) est alimenté en combustible de brûleur et en air de brûleur par le biais d'un tuyau de combustible (361) et d'un tuyau d'air (362), et
le milieu de refroidissement est l'air de brûleur fourni au brûleur (320) ; dans lequel
le chemin d'écoulement de refroidissement (370) est raccordé à un tuyau d'alimentation (363) et à un tuyau d'évacuation (364) à l'extérieur du corps principal de réacteur (331),
le tuyau d'alimentation (363) est raccordé au tuyau d'air (362), et
le tuyau d'évacuation (364) est raccordé à l'un quelconque du tuyau d'air (362) et du tuyau de combustible (361) ; dans lequel
le corps principal de réacteur (331) a un catalyseur (332) à l'intérieur, le catalyseur (332) étant positionné dans le corps principal de réacteur (331) à une distance prédéterminée d'extrémités supérieure et inférieure du corps principal de réacteur (331), et
un tuyau d'entrée (334) et un tuyau de sortie (335) pour le gaz reformé sont raccordés à une portion supérieure d'une paroi latérale et une portion inférieure de la paroi latérale du corps principal de réacteur (331) qui butent contre le catalyseur (332), la paroi latérale du corps principal de réacteur (331) raccordant les extrémités supérieure et inférieure du corps principal de réacteur (331) ; dans lequel
le chemin d'écoulement de refroidissement (370) inclut une première plaque couvrante (371) qui couvre une extrémité supérieure du catalyseur (332), une seconde plaque couvrante (372) qui couvre une extrémité inférieure du catalyseur (332), et une pluralité de tuyaux de refroidissement (373) qui sont raccordés à la première plaque couvrante (371) et à la seconde plaque couvrante (372) et pénètrent dans le catalyseur (332), et
le tuyau d'alimentation (363) et le tuyau d'évacuation (364) pour le milieu de refroidissement sont raccordés à des extrémités inférieure et supérieure du corps principal de réacteur (331).

6. Système de pile à combustible (100) selon la revendication 5, dans lequel :
la vanne (340) est une vanne 3 voies raccordée au tuyau d'air (362) et au tuyau d'alimentation (363), la vanne (340) est configurée pour fournir le milieu de refroidissement au brûleur (320) par le biais du tuyau d'air (362) lorsque le réacteur gaz-eau (330) démarre, et la vanne (340) est configurée pour fournir le milieu de refroidissement au chemin d'écoulement de refroidissement (370) par le biais du tuyau d'alimentation (363) lorsque le réacteur gaz-eau (330) fonctionne normalement.

7. Système de pile à combustible (100) selon la revendication 6, dans lequel :
une température du milieu de refroidissement fourni au chemin d'écoulement de refroidissement (370) est configurée pour être augmentée par le biais d'un échange de chaleur avec le réacteur gaz-eau (330), puis le milieu de refroidissement est configuré pour être fourni au brûleur (320) par le tuyau d'évacuation (364).

8. Système de pile à combustible (100) selon la revendication 5, dans lequel :
un bord de la première plaque couvrante (371) et un bord de la seconde plaque couvrante (372) sont scellés pour empêcher le gaz reformé fourni en entrée au catalyseur (332) de fuir.
